# EUROPÄISCHE PATENTSCHRIFT

(11) **EP 2 706 010 B1**
(45) Veröffentlichungstag und Bekanntmachung des Hinweises auf die Patenterteilung: **27.05.2020**
(21) Anmeldenummer: 13181883.3
(22) Anmeldetag: 27.08.2013
(51) Int. Cl.: B64D 11/06, B60N 2/427, B60N 2/42

(54) **Sitzenergieabsorptionsvorrichtung**
Seat energy absorption device
Dispositif d'absorption de l'énergie d'assise

(30) Priorität: 07.09.2012 DE 102012108352
(43) Veröffentlichungstag der Anmeldung: 12.03.2014
(73) Patentinhaber: Recaro Aircraft Seating GmbH & Co. KG, 74523 Schwäbisch Hall (DE)
(72) Erfinder: Szelagowski, Michal, 58560 Jelenia Gora (PL); Braun, Dieter, 67697 Otterberg (DE); Minzer, Heiko, 74523 Schwäbisch Hall (DE)
(74) Vertreter: Daub, Thomas

(56) Entgegenhaltungen:
- EP-A1- 2 127 941
- WO-A1-2006/018721
- DE-A1- 19 853 981
- DE-A1- 19 949 728
- US-A- 5 657 950
- US-A- 5 685 603

## Beschreibung

### Stand der Technik

Die Erfindung betrifft einen Flugzeugsitz mit einer Flugzeugsitzenergieabsorptionsvorrichtung nach dem Oberbegriff des Anspruchs 1.

Es ist bereits eine Sitzenergieabsorptionsvorrichtung, insbesondere eine Flugzeugsitzenergieabsorptionsvorrichtung, die dazu vorgesehen ist, zumindest in einem Crashfall zumindest eine Hauptbeschleunigungsbewegung zumindest einer Rückenlehneneinheit zumindest teilweise zu absorbieren, vorgeschlagen worden.

Aus der DE 199 49 728 A1 ist ein Kraftfahrzeugsitz bekannt, mit einer Rückenlehneneinheit mit einer Rückenlehnenlagerstelle und mit einer Sitzenergieabsorptionsvorrichtung, die dazu vorgesehen ist, zumindest in einem Crashfall zumindest eine Hauptbeschleunigungsbewegung zumindest einer Rückenlehneneinheit zumindest teilweise zu absorbieren, mit zumindest einer Sitzenergieabsorptionseinheit, die dazu vorgesehen ist, in dem Crashfall in zumindest einer von der Hauptbeschleunigungsbewegung der Rückenlehneneinheit abweichenden Richtung bewegt zu werden.

Aus der EP 2 127 941 A1 ist bereits ein Flugzeugsitz bekannt, mit einer Rückenlehneneinheit mit einer Rückenlehnenlagerstelle und mit einer Flugzeugsitzenergieabsorptionsvorrichtung, die dazu vorgesehen ist, zumindest in einem Crashfall zumindest eine Hauptbeschleunigungsbewegung zumindest einer Rückenlehneneinheit zumindest teilweise zu absorbieren wobei in einem Crashfall aufgrund einer Massenträgheit ein Großteil der Rückenlehneneinheit in Richtung der Sitzrichtung beschleunigt wird und zwar ein Großteil der Rückenlehneneinheit, der bezüglich einer im Wesentlichen senkrecht zu einem Boden ausgerichteten Vertikalrichtung oberhalb einer Rückenlehnenlagerstelle angeordnet ist und wobei die Hauptbeschleunigungsbewegung der Rückenlehneneinheit parallel zu der Sitzrichtung ausgerichtet ist, mit zumindest einer Sitzenergieabsorptionseinheit, die dazu vorgesehen ist, in dem Crashfall in zumindest einer von der Hauptbeschleunigungsbewegung der Rückenlehneneinheit abweichenden Richtung bewegt zu werden, wobei die Sitzenergieabsorptionseinheit dazu vorgesehen ist, an einem unteren Bereich der Rückenlehneneinheit angelenkt und in einem Crashfall gegen die Sitzrichtung bewegt zu werden.

Die Aufgabe der Erfindung besteht insbesondere darin, eine gattungsgemäßen Flugzeugsitz mit verbesserten Eigenschaften hinsichtlich einer Sicherheit, insbesondere einer Sicherheit eines Passagiers, bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitz mit einer Rückenlehneneinheit mit einer Rückenlehnenlagerstelle und mit einer Flugzeugsitzenergieabsorptionsvorrichtung, die dazu vorgesehen ist, zumindest in einem Crashfall zumindest eine Hauptbeschleunigungsbewegung zumindest einer Rückenlehneneinheit zumindest teilweise zu absorbieren, wobei in einem Crashfall aufgrund einer Massenträgheit ein Großteil der Rückenlehneneinheit in Richtung der Sitzrichtung beschleunigt wird und zwar ein Großteil der Rückenlehneneinheit, der bezüglich einer im Wesentlichen senkrecht zu einem Boden ausgerichteten Vertikalrichtung oberhalb einer Rückenlehnenlagerstelle angeordnet ist und wobei die Hauptbeschleunigungsbewegung der Rückenlehneneinheit parallel zu der Sitzrichtung ausgerichtet ist, mit
zumindest einer Sitzenergieabsorptionseinheit (14), die dazu vorgesehen ist, in dem Crashfall in zumindest einer von der Hauptbeschleunigungsbewegung der Rückenlehneneinheit (12) abweichenden Richtung bewegt zu werden, wobei die Sitzenergieabsorptionseinheit (14) dazu vorgesehen ist, an einem unteren Bereich der Rückenlehneneinheit (12) angelenkt und in einem Crashfall gegen die Sitzrichtung (52) bewegt zu werden.

Es wird vorgeschlagen, dass die Sitzenergieabsorptionseinheit (14) zumindest eine Anbindungsstelle (16) aufweist, die zumindest zu einer Anbindung der Sitzenergieabsorptionseinheit (14) an zumindest eine Querversteifungseinheit (18) vorgesehen ist. Unter einer "Hauptbeschleunigungsbewegung" soll insbesondere eine Beschleunigungsbewegung zumindest eines Großteils der Rückenlehneneinheit verstanden werden. Insbesondere ist die Hauptbeschleunigungsbewegung zumindest im Wesentlichen parallel zu einer Beschleunigungsbewegung eines die Sitzenergieabsorptionseinheit aufweisenden Sitzes ausgerichtet. Vorzugsweise ist die Hauptbeschleunigungsbewegung zumindest im Wesentlichen parallel zu einer Beschleunigungsbewegung eines Transportmittels, in welchem zumindest ein die Sitzenergieabsorptionseinheit aufweisender Sitz angeordnet ist, ausgerichtet. Unter einer "Sitzenergieabsorptionseinheit" soll insbesondere eine Einheit verstanden werden, die dazu vorgesehen ist, in dem Crashfall die Hauptbeschleunigungsbewegung der Rückenlehneneinheit zumindest teilweise zu absorbieren. Insbesondere ist die Sitzenergieabsorptionseinheit dazu vorgesehen, in dem Crashfall in der von der Hauptbeschleunigungsbewegung der Rückenlehneneinheit abweichenden Richtung bewegt zu werden. Insbesondere ist die Sitzenergieabsorptionseinheit dazu vorgesehen, in dem Crashfall in einer zumindest im Wesentlichen entgegen der Hauptbeschleunigungsbewegung der Rückenlehneneinheit ausgerichteten Richtung bewegt zu werden. Vorzugsweise ist die Sitzenergieabsorptionseinheit dazu vorgesehen, in dem Crashfall um mehr als 1 cm, vorzugsweise um mehr als 3 cm und insbesondere um mehr als 5 cm in der von der Hauptbeschleunigungsbewegung der Rückenlehneneinheit abweichenden Richtung bewegt zu werden. Insbesondere bewegt sich in dem Crashfall zumindest ein Großteil der Sitzenergieabsorptionseinheit in die von der Hauptbeschleunigungsbewegung der Rückenlehneneinheit abweichende Richtung. Vorzugsweise bewegt sich der Großteil der Sitzenergieabsorptionseinheit translatorisch in die von der Hauptbeschleunigungsbewegung der Rückenlehneneinheit abweichende Richtung. Unter der Wendung, dass die Sitzenergieabsorptionseinheit dazu vorgesehen ist, in dem Crashfall die Hauptbeschleunigungsbewegung der Rückenlehnen-einheit "zumindest teilweise zu absorbieren", soll insbesondere verstanden werden, dass die Sitzenergieabsorptionseinheit dazu vorgesehen ist, in dem Crashfall eine durch die Hauptbeschleunigungsbewegung der Rückenlehneneinheit aufgebrachte, insbesondere auf die Sitzenergieabsorptionseinheit einwirkende, Energie zu einem Anteil von mehr als 50 %, vorzugsweise zu mehr als 70 % und insbesondere zu mehr als 90 % eines Betrags der durch die Hauptbeschleunigungsbewegung der Rückenlehneneinheit aufgebrachten Energie zu absorbieren. Unter "absorbieren" soll insbesondere in sich aufnehmen verstanden werden. Insbesondere ist die Sitzenergieabsorptionseinheit dazu vorgesehen, in dem Crashfall die durch die Hauptbeschleunigungsbewegung der Rückenlehneneinheit aufgebrachte Energie zumindest teilweise in sich aufzunehmen. Vorzugsweise ist die Sitzenergieabsorptionseinheit dazu vorgesehen, in dem Crashfall die durch die Hauptbeschleunigungsbewegung der Rückenlehneneinheit aufgebrachte Energie zumindest teilweise in zumindest eine weitere, sich von der einen Energie unterscheidende Energie umzuwandeln. Insbesondere ist die Sitzenergieabsorptionseinheit dazu vorgesehen, in dem Crashfall die Hauptbeschleunigungsbewegung der Rückenlehneneinheit zumindest teilweise abzubremsen. Unter einer von der Hauptbeschleunigungsbewegung der Rückenlehneneinheit "abweichenden Richtung" soll insbesondere eine Richtung verstanden werden, die durch eine Drehung um einen Winkel in einem Bereich von einschließlich 90° bis einschließlich 180° in Richtung der Hauptbeschleunigungsbewegung der Rückenlehneneinheit ausgerichtet ist. Insbesondere schließt die von der Hauptbeschleunigungsbewegung der Rückenlehneneinheit abweichende Richtung mit einer Hauptbeschleunigungsbewegungsrichtung der Hauptbeschleunigungsbewegung einen Winkel in einem Bereich von einschließlich 90° und einschließlich 180° ein und/oder ist entgegen, insbesondere antiparallel, zu der Hauptbeschleunigungsbewegungsrichtung ausgerichtet. Unter einer "zumindest im Wesentlichen entgegen der Hauptbeschleunigungsrichtung der Rückenlehneneinheit ausgerichteten Richtung" soll insbesondere eine Richtung verstanden werden, die von einer entgegen der Hauptbeschleunigungsrichtung ausgerichteten Richtung um weniger als 10°, vorzugsweise um weniger als 5° und insbesondere um weniger als 3° abweicht. Unter einer "entgegen der Hauptbeschleunigungsrichtung der Rückenlehneneinheit ausgerichteten Richtung" soll insbesondere eine Richtung verstanden werden, die durch eine Drehung um 180° in Richtung der Hauptbeschleunigungsrichtung ausgerichtet ist. Unter einem "Großteil einer Einheit", insbesondere einer Rückenlehneneinheit und/oder einer Sitzenergieabsorptionseinheit, soll insbesondere ein Massenanteil und/oder ein Volumenanteil von mehr als 70 %, vorzugsweise von mehr als 75 % und insbesondere von mehr als 80 % eines Betrags einer Gesamtmasse und/oder eines Gesamtvolumens der Einheit verstanden werden. Unter einem "Transportmittel" soll dabei insbesondere jegliche Art von Verkehrsmittel verstanden werden, das mit Sitzen ausgestattet und dazu vorgesehen ist, Personen zu transportieren. Beispielsweise kann ein Transportmittel ein Schiff, ein Omnibus, ein Kraftwagen, ein Schienenfahrzeug wie beispielsweise eine Eisenbahn oder eine Straßenbahn sein. Vorzugsweise ist das Transportmittel ein Flugzeug. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere um weniger als 1° von einem Winkel von 0° abweicht. Unter "vorgesehen" soll insbesondere speziell ausgelegt und/oder ausgestattet verstanden werden. Durch eine erfindungsgemäße Ausgestaltung kann vorteilhaft die Hauptbeschleunigungsbewegung der Rückenlehneneinheit in einer konstruktiv einfachen und zuverlässigen Weise absorbiert werden, wodurch vorteilhaft eine Sicherheit für einen Passagier erhöht werden kann. Durch eine erfindungsgemäße Ausgestaltung kann vorteilhaft die Sitzenergieabsorptionseinheit mit der Querversteifungseinheit verbunden werden, wodurch eine sichere Lagerung der Sitzenergieabsorptionseinheit erreicht werden kann. Dadurch kann vorteilhaft eine zuverlässige, sichere Sitzenergieabsorptionseinheit realisiert werden.

Insbesondere weist die Sitzenergieabsorptionseinheit zumindest eine weitere Anbindungsstelle auf, die zumindest zu einer Anbindung der Sitzenergieabsorptionseinheit an die Rückenlehneneinheit vorgesehen ist. Unter einer "Anbindungsstelle" soll insbesondere eine Stelle verstanden werden, die dazu vorgesehen ist, zumindest eine Einheit, insbesondere die Sitzenergieabsorptionseinheit, mit zumindest einer weiteren, von der einen Einheit getrennt ausgebildeten Einheit zu verbinden. Insbesondere ist die Anbindungsstelle dazu vorgesehen, die Einheit und die weitere Einheit miteinander zu koppeln. Vorzugsweise ist die Anbindungsstelle dazu vorgesehen, zumindest einen Austausch zumindest einer Kraft und/oder zumindest einer Energie zwischen den Einheiten zu ermöglichen. Insbesondere ist die Anbindungsstelle dazu vorgesehen, eine Bewegung zumindest einer der beiden Einheiten an die mit der Einheit gekoppelte Einheit der beiden Einheiten zu übertragen. Unter einer "Querversteifungseinheit" soll insbesondere eine Einheit verstanden werden, die dazu vorgesehen ist, zumindest eine Einheit, insbesondere eine Rückenlehneneinheit, in einer Einheitenquerrichtung der Einheit zu versteifen. Insbesondere ist die Querversteifungseinheit dazu vorgesehen, zumindest eine Bewegung einer Seite der Einheit mit einer Bewegung einer weiteren, in der Einheitenquerrichtung von der einen Seite beabstandete heit zu koppeln. Vorzugsweise ist die Querversteifungseinheit zu einer beweglichen Lagerung der Einheit vorgesehen. Insbesondere ist die Querversteifungseinheit an zumindest einer Aufständereinheit zumindest eines Sitzes, insbesondere an zumindest einem Sitzteiler des Sitzes, insbesondere beweglich, gelagert. Vorzugsweise weist die Querversteifungseinheit eine Querversteifungseinheitenquerrichtung auf, die zumindest im Wesentlichen parallel zu einer Aufständerfläche des Sitzes, insbesondere zu dem Boden, ausgerichtet ist. Insbesondere ist die Querversteifungseinheitenquerrichtung zumindest im Wesentlichen senkrecht zu einer Sitzrichtung ausgerichtet. Insbesondere ist die Einheitenquerrichtung zumindest im Wesentlichen parallel zu der Querversteifungseinheitenquerrichtung ausgerichtet. Vorzugsweise ist die Einheit als eine Rückenlehneneinheit ausgebildet. Insbesondere ist die Querversteifungseinheit mittels der Sitzenergieabsorptionseinheit mit der Rückenlehneneinheit gekoppelt. Zusätzlich ist denkbar, dass die Einheit als eine Sitzbodeneinheit ausgebildet ist, wobei die Querversteifungseinheit, vorzugsweise direkt, mit der Sitzbodeneinheit gekoppelt ist. Dadurch ist denkbar, dass mittels der Querversteifungseinheit die Rückenlehneneinheit und die Sitzbodeneinheit, insbesondere eine Bewegung der Rückenlehneneinheit und der Sitzbodeneinheit, miteinander gekoppelt sind. Alternativ ist denkbar, dass die Querversteifungseinheit an der Aufständereinheit des Sitzes, insbesondere an zumindest einem Sitzteiler des Sitzes, vorzugsweise fest, insbesondere drehfest, gelagert ist. Denkbar ist zudem, dass die Querversteifungseinheit an einem Tragrohr der Aufständereinheit des Sitzes gelagert ist. Ebenfalls denkbar ist, dass die Querversteifungseinheit an einem weiteren, einem Fachmann als sinnvoll erscheinenden Bauteil der Aufständereinheit des Sitzes gelagert ist. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere um weniger als 1° von einem Winkel von 90° abweicht. Unter einer "Aufständereinheit" soll insbesondere eine Einheit verstanden werden, die dazu vorgesehen ist, einen Sitz, insbesondere einen Sitz mit einer Sitzbodeneinheit und mit einer Rückenlehneneinheit, auf einem Boden, insbesondere auf einem Boden eines Transportmittels, aufzuständern. Insbesondere ist die Aufständereinheit dazu vorgesehen, Gewichtskräfte des Sitzes und, falls eine Person auf dem Sitz sitzen sollte, Gewichtskräfte der auf dem Sitz sitzenden Person und/oder durch einen Transport bedingte, auf die Person wirkende Beschleunigungskräfte auf den Boden zu übertragen. Unter einem "Sitzteiler" soll insbesondere ein Bauteil einer Sitzreihe mit zumindest zwei seitlich nebeneinander angeordneten Sitzen verstanden werden, das bezüglich einer vertikal zu einer Aufständerfläche der Sitzreihe ausgerichteten Vertikalrichtung zumindest im Wesentlichen oberhalb zumindest eines Querträgers, insbesondere eines Single Beams und/oder einer Querstange, angeordnet ist. Insbesondere ist der Sitzteiler ein starr ausgebildetes Bauteil der Sitzreihe. Vorzugsweise ist der Sitzteiler zumindest im Wesentlichen bezüglich der Vertikalrichtung oberhalb einer Sitzbodeneinheit eines jeweiligen Sitzes der zumindest zwei seitlich nebeneinander angeordneten Sitze der Sitzreihe angeordnet. Insbesondere ist der Sitzteiler dazu vorgesehen, eine Armauflageeinheit zu lagern. Vorzugsweise ist der Sitzteiler dazu vorgesehen, eine Gurtanbindung zu ermöglichen. Insbesondere ist der Sitzteiler zu einer Tragrohraufnahme vorgesehen. Vorzugsweise bildet der Sitzteiler eine seitliche Begrenzung zumindest eines der zumindest zwei seitlich nebeneinander angeordneten Sitze, wobei der Sitzteiler gangseitig und/oder bordseitig angeordnet sein kann, und/oder eine Abgrenzung zwischen zwei seitlich nebeneinander angeordneten Sitzen der zumindest zwei Sitze aus. Insbesondere ist der Sitzteiler ein Bestandteil einer Kraftableitung, welche über die Rückenlehneneinheit, den Sitzteiler, eine Tragrohrstruktur und die Aufständereinheit in eine Aufständerfläche, insbesondere in den Boden, erfolgt. Unter einer "Sitzrichtung" soll insbesondere eine Richtung verstanden werden, welche bei einem ordnungsgemäßen Sitzen eines Passagiers, insbesondere bei parallel ausgerichteten Oberschenkeln des Passagiers, im Wesentlichen der Richtung entspricht, in welcher sich die Oberschenkel des Passagiers vom Gesäß bis zum Kniebereich erstrecken. In einer aufrechten Stellung des Sitzes, in welcher die Rückenlehneneinheit zumindest im Wesentlichen senkrecht zu dem Boden ausgerichtet ist, ist die Sitzrichtung parallel zu dem Boden und zumindest im Wesentlichen senkrecht zu der von der Rückenlehneneinheit gebildeten Rückenlehnenfläche ausgerichtet. Wird die Sitzvorrichtung für einen Fluggastsitz verwendet, entspricht die Sitzrichtung typischerweise der Flugrichtung. Durch eine erfindungsgemäße Ausgestaltung kann vorteilhaft die Sitzenergieabsorptionseinheit mit der Querversteifungseinheit verbunden werden, wodurch eine sichere Lagerung der Sitzenergieabsorptionseinheit erreicht werden kann. Dadurch kann vorteilhaft eine zuverlässige, sichere Sitzenergieabsorptionseinheit realisiert werden.

Zudem wird vorgeschlagen, dass die Querversteifungseinheit als ein Torsionselement ausgebildet ist. Unter einem "Torsionselement" soll insbesondere ein Element verstanden werden, das dazu vorgesehen ist, zumindest eine Torsionskraft zu absorbieren, insbesondere aufzunehmen. Insbesondere ist das Torsionselement dazu vorgesehen, zumindest eine auf das Torsionselement einwirkende Kraft und/oder zumindest eine auf das Torsionselement einwirkende Energie, insbesondere in eine Aufständereinheit, abzuleiten. Beispielsweise weist das Torsionselement bei Betrachtung in einer Querschnittsebene eine eckige, beispielsweise eine dreieckige und/oder viereckige und/oder mehreckige, Gestalt auf. Ebenfalls denkbar ist, dass das Torsionselement bei Betrachtung in der Querschnittsebene eine ovale, beispielsweise eine elliptische, Gestalt aufweist. Insbesondere weist das Torsionselement bei Betrachtung in der Querschnittsebene eine runde Gestalt auf. Vorzugsweise ist das Torsionselement als ein Torsionsrohr ausgebildet. Durch eine erfindungsgemäße Ausgestaltung kann vorteilhaft die Querversteifungseinheit zusätzlich zu einer eigentlichen Aufgabe der Querversteifungseinheit eine Aufgabe eines Torsionselements ausüben. Dadurch kann vorteilhaft ein separat ausgebildetes Torsionselement eingespart und damit Kosten und Gewicht reduziert werden. Zudem können vorteilhaft durch das Torsionselement Torsionskräfte absorbiert und damit eine Sicherheit eines Passagiers weiter erhöht werden.

Weiterhin wird vorgeschlagen, dass die Sitzenergieabsorptionseinheit zumindest ein wenigstens einen Verzögerungsschlitz begrenzendes Verzögerungselement aufweist, das dazu vorgesehen ist, in dem Crashfall eine Bewegung zumindest eines Elements abzubremsen. Unter einem "Verzögerungselement" soll insbesondere ein Element verstanden werden, das dazu vorgesehen ist, in dem Crashfall die Bewegung des Elements abzubremsen. Insbesondere ist das Element als die Rückenlehneneinheit ausgebildet. Vorzugsweise ist das Element als die Sitzenergieabsorptionseinheit ausgebildet. Insbesondere ist das Verzögerungselement dazu vorgesehen, die Hauptbeschleunigungsbewegung der Rückenlehneneinheit abzubremsen, insbesondere zu absorbieren. Unter einem "Verzögerungsschlitz" soll insbesondere ein Schlitz verstanden werden, der eine Schlitzlängserstreckung mit einem Betrag aufweist, der mehr als 3 mal, vorzugsweise mehr als 5 mal und insbesondere mehr als 10 mal größer ist als ein Betrag einer maximalen Schlitzquererstreckung des Schlitzes. Unter einer "Schlitzlängserstreckung" soll insbesondere eine maximale Erstreckung zwischen zwei Oberflächenpunkten einer den Verzögerungsschlitz begrenzenden Schlitzbegrenzungsoberfläche des Verzögerungselements verstanden werden, insbesondere bei einer Betrachtung in zumindest einer Ebene, auf der das Verzögerungselement den Verzögerungsschlitz zumindest im Wesentlichen umschließt. Insbesondere ist die Schlitzlängserstreckung zumindest im Wesentlichen senkrecht zu der Querversteifungseinheitenquerrichtung ausgerichtet. Vorzugsweise ist die Schlitzlängserstreckung zumindest im Wesentlichen parallel zu der Sitzrichtung ausgerichtet. Unter einer "Schlitzquererstreckung" soll insbesondere eine maximale, zumindest im Wesentlichen senkrecht zu der Schlitzlängserstreckung ausgerichtete Erstreckung zwischen zwei Oberflächenpunkten der den Verzögerungsschlitz begrenzenden Schlitzbegrenzungsoberfläche des Verzögerungselements verstanden werden. Insbesondere ist die Schlitzquererstreckung zumindest im Wesentlichen senkrecht zu der Querversteifungseinheitenquerrichtung ausgerichtet. Vorzugsweise ist die Schlitzquererstreckung zumindest im Wesentlichen senkrecht zu der Sitzrichtung ausgerichtet. Unter einer Ebene, auf der das Verzögerungselement den Verzögerungsschlitz "zumindest im Wesentlichen umschließt", soll insbesondere verstanden werden, dass das Verzögerungselement den Verzögerungsschlitz in der Ebene über einen Winkelbereich von mehr als 300°, vorzugsweise mehr als 330° und insbesondere mehr als 350° umgibt. Durch eine erfindungsgemäße Ausgestaltung kann vorteilhaft die Bewegung des Elements sicher und konstruktiv einfach abgebremst werden.

Ferner wird vorgeschlagen, dass der Verzögerungsschlitz zumindest zwei verschiedene Schlitzquererstreckungen aufweist. Insbesondere weist der Verzögerungsschlitz zumindest drei verschiedene Schlitzquererstreckungen auf. Vorzugsweise weist der Verzögerungsschlitz einen, sich in einer zumindest im Wesentlichen senkrecht zu der Schlitzquererstreckung ausgerichteten Schlitzlängsrichtung erstreckenden, sich verjüngenden Verlauf auf. Insbesondere erstreckt sich der sich verjüngende Verlauf ausgehend von einem der Rückenlehneneinheit zugewandten, die Schlitzlängserstreckung begrenzenden Oberflächenpunkt in Richtung der Schlitzlängsrichtung, wobei der sich verjüngende Verlauf bei zumindest im Wesentlichen 50 % eines Betrags der Schlitzlängserstreckung in einen sich aufweitenden Verlauf übergeht. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts abweicht. Unter einer "Schlitzlängsrichtung" soll insbesondere eine Richtung verstanden werden, die in einem montierten Zustand der Sitzenergieabsorptionseinheit ausgehend von einem der Rückenlehneneinheit zugewandten Bereich in Richtung eines der Rückenlehneneinheit abgewandten Bereichs der Sitzenergieabsorptionseinheit und zumindest im Wesentlichen parallel zu der Schlitzlängserstreckung ausgerichtet ist. Durch eine erfindungsgemäße Ausgestaltung kann vorteilhaft in einer sicheren Weise eine definierte Krafteinleitung in das Verzögerungselement realisiert werden.

Zudem wird vorgeschlagen, dass die Sitzenergieabsorptionseinheit dazu vorgesehen ist, in dem Crashfall zumindest durch plastische Verformung Energie zu absorbieren. Unter einer "plastischen Verformung" einer Einheit, insbesondere der Sitzenergieabsorptionseinheit, soll insbesondere eine irreversible Gestaltsänderung der Einheit bei Einwirken einer äußeren Kraft und/oder Energie auf die Einheit verstanden werden. Insbesondere soll unter der plastischen Verformung eine Eigenschaft der Einheit verstanden werden, sich bei Einwirken einer äußeren Kraft und/oder Energie auf die Einheit irreversibel zu verformen und eine durch die Verformung erhaltene Gestalt nach Beendigung des Einwirkens der äußeren Kraft und/oder Energie beizubehalten. Durch eine erfindungsgemäße Ausgestaltung kann vorteilhaft eine effektive, sichere Umwandlung der Hauptbeschleunigungsbewegung in Verformungsenergie erreicht werden.

Weiterhin wird vorgeschlagen, dass die Sitzenergieabsorptionseinheit in zumindest einer Querschnittsebene zumindest eine zumindest im Wesentlichen U-förmige Gestalt aufweist. Unter einer "zumindest im Wesentlichen U-förmigen Gestalt" einer Einheit soll insbesondere eine Gestalt verstanden werden, die in einer Richtung offen ist, wobei in die Einheit eingebrachte Löcher und/oder Ausnehmungen und/oder Schlitze als zu der Einheit gehörig verstanden werden sollen. Insbesondere weist die Sitzenergieabsorptionseinheit in der Querschnittsebene eine U-förmige Gestalt auf. Alternativ ist denkbar, dass die Sitzenergieabsorptionseinheit in der Querschnittsebene eine V-förmige Gestalt aufweist. Ebenfalls denkbar ist, dass die Sitzenergieabsorptionseinheit in der Querschnittsebene eine bogen-förmige, beispielsweise ovale und/oder kreisförmige, Gestalt aufweist. Beispielsweise ist denkbar, dass die Sitzenergieabsorptionseinheit in der Querschnittsebene eine stufen-förmige Gestalt aufweist. Durch eine erfindungsgemäße Ausgestaltung kann vorteilhaft eine auf die Sitzenergieabsorptionseinheit einwirkende Kraft und/oder Energie günstig und sicher absorbiert, insbesondere aufgenommen, werden.

Ferner wird vorgeschlagen, dass die Sitzenergieabsorptionseinheit in Längsrichtung eine zumindest im Wesentlichen bogenartige Gestalt aufweist. Unter einer "zumindest im Wesentlichen bogenartigen Gestalt" der Sitzenergieabsorptionseinheit soll insbesondere eine Gestalt verstanden werden, die bei einer gedachten, als Gerade ausgebildeten Verbindung von zwei bezüglich der Längsrichtung beabstandeten Enden der Sitzenergieabsorptionseinheit auf einer Seite der Gerade angeordnet und zu der Geraden beabstandet ist. Insbesondere ist ein Abstand der Gestalt von der Geraden bei zumindest im Wesentlichen 50 % eines Betrags einer Erstreckung der Geraden zwischen den beiden Enden maximal. Vorzugsweise sind die beiden Enden bezüglich einer zumindest im Wesentlichen senkrecht zu der Längsrichtung sowie zu einer Querrichtung der Sitzenergieabsorptionseinheit ausgerichteten Höhenrichtung in einem Endbereich, vorzugsweise in einem montierten Zustand in einem unteren Endbereich, der Sitzenergieabsorptionseinheit angeordnet. Insbesondere weist die Sitzenergieabsorptionseinheit in Längsrichtung eine bogenförmige Gestalt auf. Alternativ ist denkbar, dass die Sitzenergieabsorptionseinheit in Längsrichtung eine zumindest im Wesentlichen U-förmige Gestalt aufweist. Durch eine erfindungsgemäße Ausgestaltung kann vorteilhaft die Sitzenergieabsorptionseinheit bei einer Bewegung der Rückenlehneneinheit beabstandet zu der Querversteifungseinheit angeordnet werden, wodurch vorteilhaft eine Kollision der Sitzenergieabsorptionseinheit und der Querversteifungseinheit vermieden und eine Funktionalität der Sitzenergieabsorptionseinheit aufrechterhalten werden kann. Dadurch kann vorteilhaft eine Sicherheit für einen Passagier weiter erhöht werden.

Zudem wird ein Sitz, insbesondere ein Flugzeugsitz, mit zumindest einer erfindungsgemäßen Sitzenergieabsorptionsvorrichtung vorgeschlagen. Beispielsweise ist denkbar, dass der Sitz eine einzige Sitzenergieabsorptionsvorrichtung aufweist, die in einem montierten Zustand in einem Seitenbereich des Sitzes, insbesondere an einem unteren Rückenlehnenrahmenende der Rückenlehneneinheit, angeordnet ist und die Rückenlehneneinheit in dem Seitenbereich mit der Querversteifungseinheit verbindet. Ebenfalls denkbar ist, dass die eine Sitzenergieabsorptionsvorrichtung des Sitzes in einer Mitte des Sitzes angeordnet ist und die Rückenlehneneinheit mittig mit der Querversteifungseinheit verbindet. Insbesondere weist der Sitz zumindest zwei Sitzenergieabsorptionsvorrichtungen auf, die in einem montierten Zustand jeweils in einem Seitenbereich des Sitzes angeordnet sind und die Rückenlehneneinheit jeweils mit der Querversteifungseinheit verbinden. Durch eine erfindungsgemäße Ausgestaltung kann vorteilhaft ein sicherer Sitz erreicht werden.

Weiterhin wird vorgeschlagen, dass der Sitz zumindest eine Rückenlehneneinheit, die dazu vorgesehen ist, in einem unteren Bereich der Rückenlehneneinheit an die Sitzenergieabsorptionsvorrichtung angelenkt zu sein, aufweist. Unter einem "unteren Bereich" der Rückenlehneneinheit soll insbesondere ein Bereich verstanden werden, der in einem montierten Zustand des Sitzes in einem einer Aufständerfläche, insbesondere einem Boden, zugewandten Endbereich der Rückenlehneneinheit angeordnet ist. Insbesondere weist der untere Bereich eine zumindest im Wesentlichen parallel zu einer Rückenlehneneinheitlängserstreckung ausgerichtete Bereichserstreckung auf, die einen Betrag von weniger als 30 %, vorzugsweise von weniger als 15 % und insbesondere von weniger als 10 % eines Betrags der Rückenlehneneinheitlängserstreckung aufweist. Vorzugsweise weist der untere Bereich eine Bereichsoberfläche mit einem Betrag von weniger als 30 %, vorzugsweise von weniger als 15 % und insbesondere von weniger als 10 % eines Betrags einer Rückenlehneneinheitoberfläche auf. Durch eine erfindungsgemäße Ausgestaltung kann vorteilhaft eine große Hebelwirkung realisiert werden. Zudem kann vorteilhaft die Sitzenergieabsorptionseinheit in einem montierten Zustand unterhalb einer Sitzbodeneinheit angeordnet werden, wodurch vorteilhaft eine Kollision der Sitzenergieabsorptionseinheit mit einem auf einer Sitzbodeneinheit des Sitzes sitzenden Passagier vermieden werden kann. Dadurch kann vorteilhaft eine sichere Lagerung der Sitzenergieabsorptionseinheit erreicht werden.

Die erfindungsgemäße Sitzenergieabsorptionsvorrichtung soll hierbei nicht auf die oben beschriebene Anwendung und Ausführungsform beschränkt sein. Insbesondere kann die erfindungsgemäße Sitzenergieabsorptionsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt eines erfindungsgemäßen Sitzes mit einer erfindungsgemäßen Sitzenergieabsorptionsvorrichtung in einer vereinfachten, perspektivischen Darstellung und
- Fig. 2: die erfindungsgemäße Sitzenergieabsorptionsvorrichtung aus Fig. 1 in einer perspektivischen Darstellung.

### Beschreibung des Ausführungsbeispiels

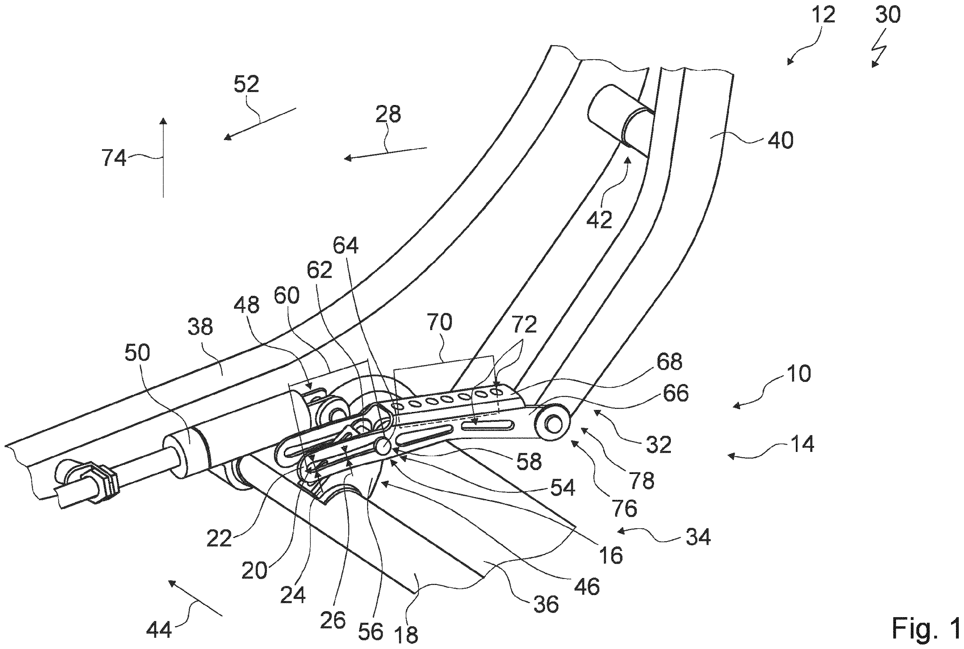

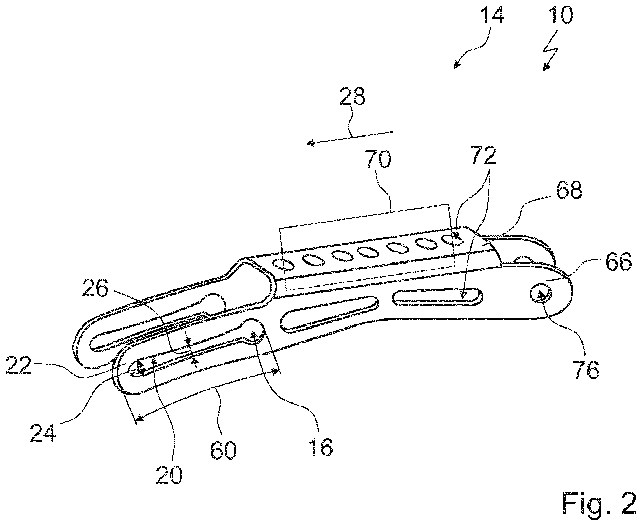

Fig. 1 zeigt einen Ausschnitt eines erfindungsgemäßen Sitzes 30 mit einer erfindungsgemäßen Sitzenergieabsorptionsvorrichtung 10 in einer vereinfachten, perspektivischen Darstellung. In Fig. 1 sind lediglich für die Erfindung wesentliche Merkmale dargestellt. Fig. 1 zeigt lediglich eine Seite des Sitzes 30. Der Sitz 30 umfasst zwei erfindungsgemäßen Sitzenergieabsorptionsvorrichtungen 10, wobei die in Fig. 1 gezeigte Sitzenergieabsorptionsvorrichtung 10 auf der einen Seite des Sitzes 30 und die weitere Sitzenergieabsorptionsvorrichtung 10 auf einer von der gezeigten Seite in einer Querversteifungseinheitenquerrichtung 44 beabstandeten weiteren Seite des Sitzes 30 angeordnet sind. Im Folgenden wird lediglich die in Fig. 1 gezeigte Seite des Sitzes 30 beschrieben, wobei für einen Fachmann klar ist, dass die von der gezeigten Seite in der Querversteifungseinheitenquerrichtung 44 beabstandete weitere Seite des Sitzes 30 im Wesentlichen gleich ausgebildet ist. Andernfalls wird in nachfolgender Beschreibung ausdrücklich darauf verwiesen, dass entsprechende Merkmale lediglich die gezeigte Seite betreffen. Zudem sind der Übersichtlichkeit halber einige auf die Sitzenergieabsorptionsvorrichtung 10 bezogene Bezugszeichen lediglich in Fig. 2 dargestellt. Fig. 2 zeigt die erfindungsgemäße Sitzenergieabsorptionsvorrichtung 10 aus Fig. 1 in einer perspektivischen Darstellung.

Der Sitz 30 ist als ein Flugzeugsitz ausgebildet. Analog hierzu ist die Sitzenergieabsorptionsvorrichtung 10 als eine Flugzeugsitzenergieabsorptionsvorrichtung ausgebildet. Der Sitz 30 weist eine Aufständereinheit 34 auf, die dazu vorgesehen ist, den Sitz 30 auf einem Boden eines Flugzeugs (nicht dargestellt) aufzuständern. Die Aufständereinheit 34 ist in Fig. 1 lediglich ausschnittsweise dargestellt. Beispielsweise ist in Fig. 1 ein Tragrohr 36 der Aufständereinheit 34 ausschnittsweise dargestellt. Der Sitz 30 weist einen Sitzteiler 38 auf, der als eine seitliche Begrenzung des Sitzes 30 ausgebildet ist. Zudem ist der Sitzteiler 38 zu einer Lagerung des Tragrohrs 36 vorgesehen. Der Sitz 30 weist eine Sitzbodeneinheit (nicht dargestellt) auf, welche eine Sitzfläche für einen Passagier (nicht dargestellt) ausbildet. Zudem weist der Sitz 30 eine Armlehneneinheit (nicht dargestellt) zu einer Auflage eines Arms des Passagiers auf. Der Sitzteiler 38 ist zu einer Lagerung der Armlehneneinheit sowie der Sitzbodeneinheit vorgesehen.

Der Sitz 30 ist ausgestattet mit einer Rückenlehneneinheit 12, die dazu vorgesehen ist, in einem unteren Bereich 32 der Rückenlehneneinheit 12 an die Sitzenergieabsorptionsvorrichtung 10 angelenkt zu sein. Die Rückenlehneneinheit 12 ist in Fig. 1 ebenfalls nur ausschnittsweise dargestellt. Die Rückenlehneneinheit 12 weist einen Rückenlehnenrahmen 40 auf, der in dem unteren Bereich 32 an die Sitzenergieabsorptionsvorrichtung 10 angelenkt ist. Die Rückenlehneneinheit 12 ist schwenkbar an dem Sitz 30 gelagert. Der Sitzteiler 38 weist eine Rückenlehnenlagerstelle 42 auf, mittels welcher die Rückenlehneneinheit 12 an dem Sitzteiler 38 schwenkbar gelagert ist. Und zwar ist die Rückenlehneneinheit 12 mittels des Rückenlehnenrahmens 40 schwenkbar an dem Sitzteiler 38 gelagert. Der Sitz 30 weist einen sogenannten Hydrolock 50 auf, der dazu vorgesehen ist, die Rückenlehneneinheit 12 zu bewegen. Der Sitz 30 weist im vorliegenden Ausführungsbeispiel lediglich den einen Hydrolock 50 auf, der auf der in Fig. 1 gezeigten Seite des Sitzes 30 angeordnet ist. Ebenfalls denkbar ist, dass der Sitz 30 zwei Hydrolocks 50 aufweist, wobei der Hydrolock 50 auf der in Fig. 1 gezeigten Seite des Sitzes 30 und der weitere Hydrolock 50 auf der in der Querversteifungseinheitenquerrichtung 44 beabstandeten weiteren Seite des Sitzes 30 angeordnet ist.

Ausgestattet ist der Sitz 30 mit einer Querversteifungseinheit 18, die dazu vorgesehen ist, die Rückenlehneneinheit 12 in der Querversteifungseinheitenquerrichtung 44 zu versteifen. Zudem ist die Querversteifungseinheit 18 dazu vorgesehen, die eine Seite des Sitzes 30 mit der weiteren Seite des Sitzes 30 zu verbinden. Die Querversteifungseinheit 18 ist drehbar in dem Sitzteiler 38 gelagert. Die Querversteifungseinheit 18 ist dazu vorgesehen, bei der Bewegung der Rückenlehneneinheit 12 gedreht zu werden. Die Querversteifungseinheit 18 ist als ein Torsionselement ausgebildet. Im vorliegenden Ausführungsbeispiel ist das Torsionselement als ein Torsionsrohr ausgebildet. Die Rückenlehneneinheit 12 und die Querversteifungseinheit 18 sind mittels der Sitzenergieabsorptionsvorrichtung 10 miteinander gekoppelt. Die Querversteifungseinheit 18 weist eine Lagereinheit 46 auf, die zu einer Kopplung an die Sitzenergieabsorptionsvorrichtung 10 vorgesehen ist. Die Lagereinheit 46 ist im vorliegenden Ausführungsbeispiel mit der Querversteifungseinheit 18 verschweißt. Ebenfalls denkbar ist, dass die Lagereinheit 46 mit der Querversteifungseinheit 18 verklebt ist. Denkbar ist zudem, dass die Lagereinheit 46 und die Querversteifungseinheit 18 einstückig ausgebildet sind. Die Lagereinheit 46 weist zwei Lagerelemente 56 auf. Die Lagereinheit 46 umfasst zwei Lagereinheitenaufnahmen 58, die dazu vorgesehen sind, in einem montierten Zustand eine Mitnahmeeinheit 54 aufzunehmen. Von den beiden Lagerelementen 56 sowie den beiden Lagereinheitenaufnahmen 58 wird im Folgenden lediglich eines beschrieben und in Fig. 1 sowie Fig. 2 mit Bezugszeichen versehen. Die Lagereinheitenaufnahme 58 ist an dem Lagerelement 56 angeordnet. Die Lagereinheitenaufnahme 58 weist eine im Wesentlichen runde Querschnittsform auf.

Die Querversteifungseinheit 18 weist eine weitere Lagereinheit 48 auf, die zu einer Anbindung des Hydrolocks 50 vorgesehen ist. Der Sitz 30 weist lediglich die eine weitere Lagereinheit 48 auf, die analog zu dem Hydrolock 50 ebenfalls lediglich auf der in Fig. 1 gezeigten Seite des Sitzes 30 angeordnet ist. Die weitere Lagereinheit 48 ist analog zu der Lagereinheit 46 mit der Querversteifungseinheit 18 verschweißt. Zudem ist die weitere Lagereinheit 48 im Wesentlichen identisch zu der Lagereinheit 46 ausgebildet, weshalb auf eine detaillierte Beschreibung der weiteren Lagereinheit 48 verzichtet wird. An einem der Querversteifungseinheit 18 abweisenden Ende des Hydrolocks 50 ist der Hydrolock 50 mit dem Sitzteiler 38 verbunden.

Der Sitz 30 umfasst die Sitzenergieabsorptionsvorrichtung 10, und zwar die Flugzeugsitzenergieabsorptionsvorrichtung, die dazu vorgesehen ist, in einem Crashfall eine Hauptbeschleunigungsbewegung der Rückenlehneneinheit 12 teilweise zu absorbieren. Die Sitzenergieabsorptionsvorrichtung 10 umfasst eine Sitzenergieabsorptionseinheit 14, die dazu vorgesehen ist, in dem Crashfall in zumindest einer von der Hauptbeschleunigungsbewegung der Rückenlehneneinheit 12 abweichenden Richtung bewegt zu werden. In dem Crashfall ist die Hauptbeschleunigungsbewegung der Rückenlehneneinheit 12 im Wesentlichen parallel zu einer Sitzrichtung 52 ausgerichtet. Die von der Hauptbeschleunigungsbewegung der Rückenlehneneinheit 12 abweichende Richtung ist im Wesentlichen entgegen der Sitzrichtung 52 ausgerichtet. Eine Bewegung von Komponenten des Sitzes 30 wird weiter unten näher erläutert. Zunächst soll jedoch die Sitzenergieabsorptionsvorrichtung 10 beschrieben werden. Dazu wird neben Fig. 1 besonders auf Fig. 2 verwiesen.

Die Sitzenergieabsorptionseinheit 14 weist in einer Querschnittsebene eine im Wesentlichen U-förmige Gestalt auf. Die Sitzenergieabsorptionseinheit 14 weist zwei Seitenelemente 66 auf, die im Wesentlichen parallel zu einer Längsrichtung 28 der Sitzenergieabsorptionseinheit 14 ausgerichtet sind. Zudem weist die Sitzenergieabsorptionseinheit 14 ein Verbindungselement 68 auf, das dazu vorgesehen ist, die Seitenelemente 66 miteinander zu verbinden. Die Sitzenergieabsorptionseinheit 14 ist spiegelsymmetrisch zu einer Symmetrieebene 70 ausgebildet. Die Symmetrieebene 70 ist im Wesentlichen parallel zu der Längsrichtung 28 sowie im Wesentlichen senkrecht zu der Querversteifungseinheitenquerrichtung 44 ausgerichtet. Im Folgenden wird aufgrund der symmetrischen Ausbildung der Sitzenergieabsorptionseinheit 14 zu der Symmetrieebene 70 lediglich eines der Seitenelemente 66 beschrieben. Die Sitzenergieabsorptionseinheit 14 umfasst mehrere Formausnehmungen 72 zu einer Reduzierung eines Gewichts der Sitzenergieabsorptionseinheit 14. Denkbar ist auch, dass die Sitzenergieabsorptionseinheit 14 eine andere Anzahl an Formausnehmungen 72 aufweist, insbesondere auch eine Ausgestaltung der Sitzenergieabsorptionseinheit 14 unter Vermeidung von Formausnehmungen 72. Zwei der Formausnehmungen 72 sind an dem Seitenelement 66 angeordnet. Die an dem Seitenelement 66 angeordneten Formausnehmungen 72 sind als Formausnehmungsschlitze ausgebildet. Eine Vielzahl von Formausnehmungen 72 ist an dem Verbindungselement 68 angeordnet. Die an dem Verbindungselement 68 angeordneten Formausnehmungen 72 sind als Formausnehmungskreise ausgebildet. Von den Formausnehmungen 72 ist in Fig. 1 und Fig. 2 der Übersichtlichkeit halber lediglich jeweils eine mit Bezugszeichen versehen.

Die Sitzenergieabsorptionseinheit 14 weist in Längsrichtung 28 eine im Wesentlichen bogenartige Gestalt auf. Bei einer isolierten Betrachtung des Seitenelements 66 weist das Seitenelement 66 eine Gestalt eines Bumerangs auf. Dadurch verläuft die Sitzenergieabsorptionseinheit 14 bei einer Bewegung der Rückenlehneneinheit 12 und damit der Sitzenergieabsorptionseinheit 14 stets oberhalb der Querversteifungseinheit 18. Die Sitzenergieabsorptionseinheit 14 weist zwei jeweils einen Verzögerungsschlitz 20 begrenzende Verzögerungselemente 22 auf, die dazu vorgesehen sind, in dem Crashfall eine Bewegung eines Elements abzubremsen. Die beiden Verzögerungselemente 22 sind im Wesentlichen identisch ausgebildet, weshalb im Folgenden lediglich eines der beiden Verzögerungselemente 22 beschrieben und in Fig. 1 und Fig. 2 mit Bezugszeichen versehen wird. Weitere Merkmale des Verzögerungselements 22, die im Folgenden beschrieben werden, sind aufgrund der im Wesentlichen identischen Ausbildung auf beide Verzögerungselemente 22 anwendbar. Das Element umfasst die Rückenlehneneinheit 12. Zudem umfasst das Element die Sitzenergieabsorptionseinheit 14. Das Verzögerungselement 22 ist dazu vorgesehen, die Hauptbeschleunigungsbewegung der Rückenlehneneinheit 12 abzubremsen. Und zwar ist das Verzögerungselement 22 dazu vorgesehen, die Hauptbeschleunigungsbewegung der Rückenlehneneinheit 12 mittels der Sitzenergieabsorptionseinheit 14 abzubremsen. Das Verzögerungselement 22 ist an dem Seitenelement 66 der Sitzenergieabsorptionseinheit 14 angeordnet. Und zwar ist das Verzögerungselement 22 in der Längsrichtung 28 betrachtet in einem Endbereich des Seitenelements 66 angeordnet.

Die Sitzenergieabsorptionseinheit 14 weist eine Anbindungsstelle 16 auf, die zu einer Anbindung der Sitzenergieabsorptionseinheit 14 an die Querversteifungseinheit 18 vorgesehen ist. Die Anbindungsstelle 16 ist von dem Verzögerungselement 22 umgeben und als eine Ausnehmung in dem Verzögerungselement 22 ausgebildet. Die Anbindungsstelle 16 weist eine im Wesentlichen runde Querschnittsform auf. Der Sitz 30 weist eine Mitnahmeeinheit 54 auf, die dazu vorgesehen ist, in dem Crashfall mit der Sitzenergieabsorptionseinheit 14 zusammenzuwirken. Die Mitnahmeeinheit 54 ist dazu vorgesehen, die Sitzenergieabsorptionseinheit 14 mit der Querversteifungseinheit 18 zu koppeln. Die Mitnahmeeinheit 54 ist als ein Mitnahmebolzen ausgebildet. Eine Querschnittsform der Mitnahmeeinheit 54 ist an eine Querschnittsform der Anbindungsstelle 16 angepasst. Die Mitnahmeeinheit 54 weist ein Mitnahmeelement 62 auf, das dazu vorgesehen ist, in einem montierten Zustand durch die Anbindungsstelle 16 der Sitzenergieabsorptionseinheit 14 sowie durch die Lagereinheitenaufnahme 58 der Lagereinheit 46 hindurchzugreifen. In dem montierten Zustand ist das Mitnahmeelement 62 formschlüssig in der Anbindungsstelle 16 gelagert. Das Mitnahmeelement 62 weist einen Durchmesser auf, der an einen Durchmesser der Anbindungsstelle 16 angepasst ist. Der Durchmesser des Mitnahmeelements 62 ist etwas kleiner als der Durchmesser der Anbindungsstelle 16. Das Mitnahmeelement 62 ist in dem montierten Zustand formschlüssig in der Anbindungsstelle 16 gelagert. Die Mitnahmeeinheit 54 weist an ihren jeweiligen Enden jeweils einen Mitnahmekopf 64 auf, der dazu vorgesehen ist, in dem montierten Zustand die Mitnahmeeinheit 54 in der Anbindungsstelle 16 zu sichern. Der jeweilige Mitnahmekopf 64 weist eine runde Querschnittsform auf, wobei ein Durchmesser des jeweiligen Mitnahmekopfs 64 größer ist als ein Durchmesser der Anbindungsstelle 16. Die Mitnahmeeinheit 54 ist dazu vorgesehen, in dem Crashfall mit dem Verzögerungselement 22 zusammenzuwirken.

Wie bereits erwähnt, ist die Rückenlehneneinheit 12 an der Sitzenergieabsorptionsvorrichtung 10 angelenkt. Die Sitzenergieabsorptionseinheit 14 weist eine weitere Anbindungsstelle 76 auf, die zu einer Anbindung der Sitzenergieabsorptionseinheit 14 an die Rückenlehneneinheit 12 vorgesehen ist. Die weitere Anbindungsstelle 76 ist im Wesentlichen identisch zu der Anbindungsstelle 16 ausgebildet, weshalb im Folgenden auf eine detaillierte Beschreibung verzichtet wird. Der Sitz 30 weist eine weitere Mitnahmeeinheit 78 auf, die dazu vorgesehen ist, in dem Crashfall mit der Sitzenergieabsorptionseinheit 14 zusammenzuwirken. Die weitere Mitnahmeeinheit 78 ist dazu vorgesehen, die Sitzenergieabsorptionseinheit 14 mit der Rückenlehneneinheit 12 zu koppeln. Die weitere Mitnahmeeinheit 78 ist analog zu der Mitnahmeeinheit 54 ausgebildet, weshalb im Folgenden auf eine detaillierte Beschreibung verzichtet wird.

Der Verzögerungsschlitz 20 ist ausgehend von der Anbindungsstelle 16 in einer Schlitzlängsrichtung ausgerichtet. Die Schlitzlängsrichtung schließt mit der Längsrichtung 28 der Sitzenergieabsorptionseinheit 14 einen kleinsten Winkel von etwa 10° ein. Ausgehend von der Anbindungsstelle 16 weist der Verzögerungsschlitz 20 in der Längsrichtung 28 einen sich verjüngenden Verlauf auf. Bei etwa 50 % eines Betrags einer Schlitzlängserstreckung 60 geht der sich verjüngende Verlauf in einen sich aufweitenden Verlauf über. Die Schlitzlängserstreckung 60 ist im Wesentlichen parallel zu der Schlitzlängsrichtung ausgerichtet. Der Verzögerungsschlitz 20 weist mehrere verschiedene Schlitzquererstreckungen 24, 26 auf. Die Schlitzquererstreckungen 24, 26 weisen einen Betrag auf, der kleiner ist als ein Betrag des Durchmessers des Mitnahmeelements 62 der Mitnahmeeinheit 54

In dem Crashfall werden das Flugzeug und damit der in dem Flugzeug aufgeständerte Sitz 30 in Richtung der Sitzrichtung 52 beschleunigt. Dabei wird aufgrund einer Massenträgheit in dem Crashfall ein Großteil der Rückenlehneneinheit 12 in Richtung der Sitzrichtung 52 beschleunigt. Und zwar wird der Großteil der Rückenlehneneinheit 12 in Richtung der Sitzrichtung 52 beschleunigt, der bezüglich einer im Wesentlichen senkrecht zu dem Boden ausgerichteten Vertikalrichtung 74 oberhalb der Rückenlehnenlagerstelle 42 angeordnet ist. Wie bereits erwähnt, ist die Hauptbeschleunigungsbewegung der Rückenlehneneinheit 12 parallel zu der Sitzrichtung 52 ausgerichtet. Der Großteil der Rückenlehneneinheit 12 bewegt sich in dem Crashfall in Richtung der Sitzrichtung 52. Aufgrund der Massenträgheit sowie aufgrund der schwenkbaren Lagerung der Rückenlehneneinheit 12 bewegt sich der untere Bereich 32 der Rückenlehneneinheit 12 entgegen der Sitzrichtung 52. Der untere Bereich 32 der Rückenlehneneinheit 12 nimmt - aufgrund der Anbindung der Rückenlehneneinheit 12 an die Sitzenergieabsorptionseinheit 14 - die Sitzenergieabsorptionseinheit 14 bei der Bewegung entgegen der Sitzrichtung 52 mit. Somit bewegt sich die Sitzenergieabsorptionseinheit 14 in dem Crashfall entgegen der Sitzrichtung 52.

Wie bereits erwähnt, ist die Sitzenergieabsorptionseinheit 14 mittels der Anbindungsstelle 16 an der Querversteifungseinheit 18 angebunden. Die Querversteifungseinheit 18 ist drehbar an dem Sitzteiler 38 gelagert, welcher über die Aufständereinheit 34 fest mit dem Boden des Flugzeugs verbunden ist. In dem Crashfall übt die Sitzenergieabsorptionseinheit 14 eine entgegen der Sitzrichtung 52 ausgerichtete Kraft auf die Querversteifungseinheit 18 aus. Je nach einer Stellung der Querversteifungseinheit 18 in dem Crashfall dreht sich die Querversteifungseinheit 18 bis die Lagereinheit 46 entgegen der Sitzrichtung 52 zeigt. Eine weitere Bewegung der Querversteifungseinheit 18 entgegen der Sitzrichtung 52 ist aufgrund der Lagerung der Querversteifungseinheit 18 in dem Sitzteiler 38 blockiert.

Die Sitzenergieabsorptionseinheit 14 ist dazu vorgesehen, in dem Crashfall durch plastische Verformung Energie zu absorbieren. Spätestens in der oben beschriebenen Stellung der Querversteifungseinheit 18, in welcher die Lagereinheit 46 entgegen der Sitzrichtung 52 gerichtet ist, ermöglicht die Sitzenergieabsorptionseinheit 14 durch die plastische Verformung eine weitere Bewegung des unteren Bereichs 32 der Rückenlehneneinheit 12 entgegen der Sitzrichtung 52. Die Sitzenergieabsorptionseinheit 14 ist dazu vorgesehen, die weitere Bewegung des unteren Bereichs 32 der Rückenlehneneinheit 12 entgegen der Sitzrichtung 52 abzubremsen. Durch die Kraft entgegen der Sitzrichtung 52 bewegt sich der Verzögerungsschlitz 20 mit seinem sich verjüngenden Verlauf über die Mitnahmeeinheit 54. Das den Verzögerungsschlitz 20 begrenzende Verzögerungselement 22 und die Mitnahmeeinheit 54 wirken in dem Crashfall zusammen. Die Sitzenergieabsorptionseinheit 14 ist dazu vorgesehen, in dem Crashfall durch plastische Verformung die Hauptbeschleunigungsbewegung der Rückenlehneneinheit 12 zu absorbieren. In dem Crashfall wird die Rückenlehneneinheit 12 über eine Haltekraft der Anbindungsstelle 16 sowie der Mitnahmeeinheit 54 hinaus beschleunigt, wobei sich eine Lagerung der Mitnahmeeinheit 54 in dem Verzögerungsschlitz 20 weiter in der Sitzrichtung 52 verschiebt. Dabei bewegt sich die Rückenlehneneinheit 12 translatorisch in die Sitzrichtung 52. Das den Verzögerungsschlitz 20 aufweisende Verzögerungselement 22 verformt sich durch eine Beschleunigung der Anbindungsstelle 16. Die Beschleunigung der Anbindungsstelle 16 tritt aufgrund einer erhöhten, auf die Rückenlehneneinheit 12 einwirkenden Kraft auf. Die erhöhte, auf die Rückenlehneneinheit 12 einwirkende Kraft tritt aufgrund einer durch den Crashfall verursachten Beschleunigung des Elements, und zwar der Rückenlehneneinheit 12, auf. Die durch den Crashfall verursachte Beschleunigung des Elements verursacht die Bewegung des Elements.

Durch den sich verjüngenden Verlauf des Verzögerungsschlitzes 20 kann eine gezielte, definierte Krafteinleitung erreicht werden. Durch eine Ausbildung der Sitzenergieabsorptionseinheit 14 ist eine Größe einer durch plastische Verformung von der Sitzenergieabsorptionseinheit 14 aufnehmbaren Energie einstellbar. Dadurch kann die Sitzenergieabsorptionseinheit 14 auf eine Vielzahl an Bedürfnisse angepasst werden.

Alternativ sind weitere Ausgestaltungen der Sitzenergieabsorptionseinheit denkbar. Beispielsweise ist denkbar, dass die Sitzenergieabsorptionseinheit mehrteilig ausgebildet ist. Beispielsweise ist die Sitzenergieabsorptionseinheit zweiteilig ausgebildet. Dabei weist die Sitzenergieabsorptionseinheit ein an einer Rückenlehneneinheit angebundenes Sitzenergieabsorptionseinheitenlagerelement auf, das ein einen Verzögerungsschlitz begrenzendes Verzögerungselement umfasst. Zudem weist die Sitzenergieabsorptionseinheit ein das eine Sitzenergieabsorptionseinheitenlagerelement umgebendes weiteres Sitzenergieabsorptionseinheitenlagerelement auf, das eine Mitnahmeeinheit umfasst, welche in dem an dem einen Sitzenergieabsorptionseinheitenlagerelement angeordneten Verzögerungsschlitz gelagert ist. In diesem Beispiel ist die Sitzenergieabsorptionseinheit dazu vorgesehen, durch ein Zusammenwirken der beiden Sitzenergieabsorptionseinheitenlagerelemente die Bewegung des Elements abzubremsen. Ebenfalls denkbar sind weitere Ausgestaltungen des Verzögerungsschlitzes. Beispielsweise weist der Verzögerungsschlitz lediglich einen sich verjüngenden Verlauf - unter Vermeidung des sich aufweitenden Verlaufs - auf. Dabei ist ebenfalls eine Ausgestaltung des Verzögerungsschlitzes als ein ausgehend von einer Anbindungsstelle im Wesentlichen spitzwinkliges Dreieck denkbar. Weiterhin ist denkbar, dass der Verzögerungsschlitz ausgehend von einem dem Verzögerungsschlitz zuweisenden Ende einer Anbindungsstelle eine im Wesentlichen konstante Schlitzquererstreckung aufweist, wobei die Schlitzquererstreckung kleiner ist als eine Schlitzquererstreckung der Anbindungsstelle. Dabei ist denkbar, dass die im Wesentlichen konstante Schlitzquererstreckung an einem der Anbindungsstelle abweisenden Ende ein im Wesentlichen kreisförmiges Ende aufweist.

**Bezugszeichen**

| | | | |
|---|---|---|---|
| 10 | Sitzenergieabsorptionsvorrichtung | 56 | Lagerelement |
| 12 | Rückenlehneneinheit | 58 | Lagereinheitenaufnahme |
| 14 | Sitzenergieabsorptionseinheit | 60 | Schlitzlängserstreckung |
| 16 | Anbindungsstelle | 62 | Mitnahmeelement |
| 18 | Querversteifungseinheit | 64 | Mitnahmekopf |
| 20 | Verzögerungsschlitz | 66 | Seitenelement |
| 22 | Verzögerungselement | 68 | Verbindungselement |
| 24 | Schlitzquererstreckung | 70 | Symmetrieebene |
| 26 | Schlitzquererstreckung | 72 | Formausnehmung |
| 28 | Längsrichtung | 74 | Vertikalrichtung |
| 30 | Sitz | 76 | Weitere Anbindungsstelle |
| 32 | Unterer Bereich | 78 | Weitere Mitnahmeeinheit |
| 34 | Aufständereinheit | | |
| 36 | Tragrohr | | |
| 38 | Sitzteiler | | |
| 40 | Rückenlehnenrahmen | | |
| 42 | Rückenlehnenlagerstelle | | |
| 44 | Querversteifungseinheitenquerrichtung | | |
| 46 | Lagereinheit | | |
| 48 | Weitere Lagereinheit | | |
| 50 | Hydrolock | | |
| 52 | Sitzrichtung | | |
| 54 | Mitnahmeeinheit | | |

## Patentansprüche

1. Flugzeugsitz mit einer Rückenlehneneinheit mit einer Rückenlehnenlagerstelle und mit einer Flugzeugsitzenergieabsorptionsvorrichtung, die dazu vorgesehen ist, zumindest in einem Crashfall zumindest eine Hauptbeschleunigungsbewegung zumindest einer Rückenlehneneinheit (12) zumindest teilweise zu absorbieren, wobei in einem Crashfall aufgrund einer Massenträgheit ein Großteil der Rückenlehneneinheit in Richtung der Sitzrichtung beschleunigt wird und zwar ein Großteil der Rückenlehneneinheit, der bezüglich einer im Wesentlichen senkrecht zu einem Boden ausgerichteten Vertikalrichtung oberhalb einer Rückenlehnenlagerstelle angeordnet ist und wobei die Hauptbeschleunigungsbewegung der Rückenlehneneinheit parallel zu der Sitzrichtung ausgerichtet ist, mit
zumindest einer Sitzenergieabsorptionseinheit (14), die dazu vorgesehen ist, in dem Crashfall in zumindest einer von der Hauptbeschleunigungsbewegung der Rückenlehneneinheit (12) abweichenden Richtung bewegt zu werden,
wobei die Sitzenergieabsorptionseinheit (14) dazu vorgesehen ist, an einem unteren Bereich der Rückenlehneneinheit (12) angelenkt und in einem Crashfall gegen die Sitzrichtung (52) bewegt zu werden,
**dadurch gekennzeichnet, dass**
die Sitzenergieabsorptionseinheit (14) zumindest eine Anbindungsstelle (16) aufweist, die zumindest zu einer Anbindung der Sitzenergieabsorptionseinheit (14) an zumindest eine Querversteifungseinheit (18) vorgesehen ist.

2. Flugzeugsitz nach Anspruch 1, **dadurch gekennzeichnet, dass**
die Querversteifungseinheit (18) als ein Torsionselement ausgebildet ist.

3. Flugzeugsitz nach einem der vorhergehenden Ansprüche,
**dadurch gekennzeichnet, dass**
die Sitzenergieabsorptionseinheit (14) zumindest ein wenigstens einen Verzögerungsschlitz (20) begrenzendes Verzögerungselement (22) aufweist, das dazu vorgesehen ist, in dem Crashfall eine Bewegung zumindest eines Elements abzubremsen.

4. Flugzeugsitz zumindest nach Anspruch 3,
**dadurch gekennzeichnet, dass**
der Verzögerungsschlitz (20) zumindest zwei verschiedene Schlitzquererstreckungen (24, 26) aufweist.

5. Flugzeugsitz nach einem der vorhergehenden Ansprüche,
**dadurch gekennzeichnet, dass**
die Sitzenergieabsorptionseinheit (14) dazu vorgesehen ist, in dem Crashfall zumindest durch plastische Verformung Energie zu absorbieren.

6. Flugzeugsitz nach einem der vorhergehenden Ansprüche,
**dadurch gekennzeichnet, dass**
die Sitzenergieabsorptionseinheit (14) in zumindest einer Querschnittsebene zumindest eine zumindest im Wesentlichen U-förmige Gestalt aufweist.

7. Flugzeugsitz nach einem der vorhergehenden Ansprüche,
**dadurch gekennzeichnet, dass**
die Sitzenergieabsorptionseinheit (14) in Längsrichtung (28) eine zumindest im Wesentlichen bogenartige Gestalt aufweist.

8. Flugzeugsitz nach einem der vorhergehenden Ansprüche,
**gekennzeichnet durch**
zumindest eine Rückenlehneneinheit (12), die dazu vorgesehen ist, in einem unteren Bereich (32) der Rückenlehneneinheit (12) an die Flugzeugsitzenergieabsorptionsvorrichtung (10) angelenkt zu sein.

## Claims

1. Aircraft seat
with a backrest unit comprising a backrest support point as well as an aircraft seat energy absorption device that is configured, at least in a crash case, to at least partially absorb at least one main acceleration movement of at least one backrest unit (12), wherein in a crash case, due to mass inertia a large part of the backrest unit is accelerated in a direction of the sitting direction, i.e. a large part of the backrest unit that is arranged above a backrest support point relative to a vertical direction that is arranged substantially perpendicularly to a floor, and wherein the main acceleration movement of the backrest unit is oriented parallel to the sitting direction,
with at least one seat energy absorption unit (14), which is configured, in a crash case, to be moved in at least one direction that differs from the main acceleration movement of the backrest unit (12),
wherein the seat energy absorption unit (14) is configured to be articulated to a lower region of the backrest unit (12) and, in a crash case, to be moved counter to the sitting direction (52), **characterised in that** the seat energy absorption unit (14) comprises at least one connection point (16) which is configured at least for a connection of the seat energy absorption unit (14) to at least one transverse-reinforcement unit (18).

2. Aircraft seat according to claim 1,
**characterised in that** the transverse-reinforcement unit (18) is embodied as a torsion element.

3. Aircraft seat according to one of the preceding claims,
**characterised in that** the seat energy absorption unit (14) comprises at least one delay element (22) which delimits at least one delay slot (20) and is configured, in the crash case, for braking a movement of at least one element.

4. Aircraft seat at least according to claim 3,
**characterised in that** the delay slot (20) comprises at least two different transverse slot extensions (24, 26).

5. Aircraft seat according to one of the preceding claims,
**characterised in that** the seat energy absorption unit (14) is configured, in the crash case, to absorb energy at least by plastic deformation.

6. Aircraft seat according to one of the preceding claims,
**characterised in that** the seat energy absorption unit (14) has an at least substantially U-shaped form in at least one cross-section plane.

7. Aircraft seat according to one of the preceding claims,
**characterised in that** the seat energy absorption unit (14) has an at least substantially arc-shaped form in a longitudinal direction (28).

8. Aircraft seat according to one of the preceding claims,
**characterised by** at least one backrest unit (12), which is configured to be articulated to the aircraft seat energy absorption device (10) in a lower region (32) of the backrest unit (12).

## Revendications

1. Siège d'avion
- avec une unité de dossier comprenant un endroit de support de dossier de même qu'un dispositif d'absorption d'énergie de siège d'avion, qui est prévu, au moins en cas de crash, pour une absorption au moins partielle d'au moins un mouvement accélérateur principal d'au moins une unité de dossier (12),
une grande partie de l'unité de dossier étant accélérée, en cas de crash, vers une direction d'assise à cause d'une inertie de masse, notamment une grande partie de l'unité de dossier qui est disposée au-dessus d'un endroit de support de dossier par rapport à une direction verticale orientée sensiblement perpendiculairement à un sol, et
le mouvement accélérateur principal de l'unité de dossier étant aligné en parallèle à la direction d'assise,
- avec au moins une unité d'absorption d'énergie de siège (14), qui est prévue, en cas de crash, à être mue dans au moins une direction différant du mouvement accélérateur principal de l'unité de dossier (12),
l'unité d'absorption d'énergie de siège (14) étant prévue à être articulée sur une zone inférieure de l'unité de dossier (12) et, en cas de crash, à être mue contre la direction d'assise (52),
**caractérisé en ce que** l'unité d'absorption d'énergie de siège (14) comporte au moins un lieu de raccordement (16) prévu au moins pour un raccordement de l'unité d'absorption d'énergie de siège (14) à au moins une unité de renforcement transversal (18).

2. Siège d'avion selon la revendication 1,
**caractérisé en ce que** l'unité de renforcement transversal (18) est réalisée comme élément de torsion.

3. Siège d'avion selon l'une quelconque des revendications précédentes,
**caractérisé en ce que** l'unité d'absorption d'énergie de siège (14) comporte au moins un élément retardant (22) délimitant au moins une échancrure retardant (20) et prévu, en cas de cash, à freiner un mouvement d'au moins un élément.

4. Siège d'avion au moins selon la revendication 3,
**caractérisé en ce que** l'échancrure retardante(20) comporte au moins deux extensions transversales d'échancrure (24, 26) différentes.

5. Siège d'avion selon l'une quelconque des revendications précédentes,
**caractérisé en ce que** l'unité d'absorption d'énergie de siège (14) est configurée, en cas de crash, à absorber de l'énergie au moins par le biais d'une déformation plastique.

6. Siège d'avion selon l'une quelconque des revendications précédentes,
**caractérisé en ce que** dans au moins un plan de découpage transversal, l'unité d'absorption d'énergie de siège (14) au moins ait la figure au moins sensiblement en forme de U.

7. Siège d'avion selon l'une quelconque des revendications précédentes,
**caractérisé en ce que** dans une direction longitudinale (28), l'unité d'absorption d'énergie de siège (14) ait la figure au moins sensiblement en forme d'un arc.

8. Siège d'avion selon l'une quelconque des revendications précédentes,
**caractérisé par** au moins une unité de dossier (12) prévue à être articulée sur le dispositif d'absorption d'énergie de siège d'avion (10) dans une zone inférieure (32) de l'unité de dossier (12).
